# EUROPÄISCHE PATENTSCHRIFT

(11) **EP 2 052 096 B1**
(45) Veröffentlichungstag und Bekanntmachung des Hinweises auf die Patenterteilung: **18.05.2016**
(21) Anmeldenummer: 07724935.7
(22) Anmeldetag: 07.05.2007
(51) Int. Cl.: C22C 38/18, C22C 38/26, F16J 9/26

(54) **Stahlkolbenring**
Steel piston ring
Segment de piston en acier

(30) Priorität: 17.08.2006 DE 102006038669
(43) Veröffentlichungstag der Anmeldung: 29.04.2009
(73) Patentinhaber: Federal-Mogul Burscheid GmbH, 51399 Burscheid (DE)
(72) Erfinder: PELSOECZY, Laszlo, 51399 Burscheid (DE); FRITSCHE, Eric, 51399 Burscheid (DE)
(74) Vertreter: Kurig, Thomas
(86) Internationale Anmeldenummer: PCT/EP2007/004011
(87) Internationale Veröffentlichungsnummer: WO 2008/019716

(56) Entgegenhaltungen:
- EP-A1- 0 655 511
- EP-A1- 1 304 393
- DE-A1- 2 614 646
- JP-A- 4 333 545

## Beschreibung

Die vorliegende Erfindung betrifft einen Stahlwerkstoff mit verbesserter Zähigkeit und verbesserter Verschleißbeständigkeit, der insbesondere für Kolbenringe geeignet ist. Weiterhin betrifft die Erfindung Kolbenringe, die als Grundkörper einen derartigen Stahlwerkstoff umfassen.

Kolbenringe dichten den zwischen Kolbenkopf und Zylinderwand vorhandenen Spalt gegenüber dem Brennraum ab. Bei der Auf- und Abbewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann. Um das Gleit- und Verschleißverhalten von Kolbenringen gegenüber der Zylinderwand zu verbessern, wurden diese an deren Umfangsfläche mit Beschichtungen aus unterschiedlichen Materialien versehen.

Zur Herstellung hochbeanspruchter Teile von Verbrennungskraftmotoren, wie beispielsweise Kolbenringe, werden meist Gusseisenwerkstoffe bzw. Gusseisenlegierungen verwendet. Eisenwerkstoffe mit weniger als 2,08 Gew.-% Kohlenstoff bezeichnet man als Stahl. Liegt der Kohlenstoffgehalt höher, redet man von Gusseisen. Stahlwerkstoffe besitzen gegenüber Gusseisen bessere Festigkeits- und Zähigkeitseigenschaften, da keine Störung durch freien Graphit im Grundgefüge vorhanden ist.

Kolbenringe, insbesondere Kompressionsringe, unterliegen in hochbeanspruchten Motoren einer zunehmenden Belastung, unter anderem Kompressionsspitzendruck, Verbrennungstemperatur, EGR, Schmierfilmreduzierung, die deren Funktionseigenschaften, wie Verschleiß-, Brandspurbeständigkeit, Microwelding und Korrosionsbeständigkeit, maßgeblich beeinflussen.

So offenbart beispielsweise die DE 3717297 einen Kolbenring aus Gusseisen als einzigem Material mit in seiner äußeren Umfangsoberfläche nur in einem Bereich weißerstarrtem Gusseisen, hervorgerufen durch Beaufschlagen des Gusseisenmaterials mit einer Strahlung hoher Energiedichte und mit zwischen dem Gusseisengrundmetall und weißerstarrten Bereich ausgebildetem thermisch beaufschlagtem Zwischenbereich.

In der EP 0 821 073 wird eine Gusseisenlegierung mit perlitischer Grundstruktur und kugelförmigen oder vermikularförmigen Graphitausscheidungen offenbart, die aufgrund der auch bei hohen Temperaturen beständigen Festigkeitswerte insbesondere zur Anwendung in Kolbenringen einsetzbar ist.

Die JP 04-333545 A offenbart einen Stahlkolbenring mit bestimmter Legierung. Die EP 0 655 511 A1 bezieht sich auf eine Legierung für Abgassysteme.

Die Gusseisenwerkstoffe gemäß dem Stand der Technik weisen jedoch ein hohes Bruchrisiko auf, so dass es bei der Verwendung bisheriger Werkstoffe häufig zu Ringbrüchen kommt. Gestiegene mechanisch-dynamische Belastungen führen zu kürzeren Lebensdauern von Kolbenringen. Ebenso kommt es zu starkem Verschleiß und Korrosion an Lauffläche und Flanke.

Höhere Zünddrücke, reduzierte Emissionen sowie die Kraftstoff-Direkteinspritzung bedeuten steigende Belastungen für Kolbenringe. Die Folge sind Beschädigungen und Aufplattierungen von Kolbenmaterial vor allem auf der unteren Kolbenringflanke.

Aufgrund der höheren mechanischen und dynamischen Beanspruchungen von Kolbenringen fordern immer mehr Motorenhersteller Kolbenringe aus hochwertigem Stahl (vergütet und hochlegiert, wie beispielsweise Werkstoff 1.4112). Meist werden hochchromlegierte martensitische Stähle für die Herstellung von Stahlkolbenringen eingesetzt. Der Einsatz dieser Stähle weist aber den Nachteil auf, dass die Herstellungskosten im Vergleich zu Gusseisenbauteilen signifikant höher sind. Da der Stahl als Draht (analytisch definierter Werkstoff) von externen Zulieferern relativ teuer eingekauft wird, wird eine geringe Wertschöpfung erzielt.

Stahlkolbenringe werden aus Profildraht hergestellt. Der angelieferte Profildraht wird rund gewickelt, aufgeschnitten und über einen "Unrund"-Dorn gezogen. Auf diesem Dorn erhält der Kolbenring durch einen Glühprozess seine erwünschte unrunde Form, wodurch die geforderten Tangentialkräfte eingestellt werden. Ein weiterer Nachteil der Herstellung von Kolbenringen aus Stahl ist, dass ab einem gewissen Durchmesser die Ringherstellung (Wickeln) aus Stahldraht nicht mehr möglich. Kolbenringe aus Gusseisen werden dagegen bereits unrund gegossen, so dass sie von Anfang an eine ideale Form aufweisen.

Weitere Nachteile dieses Herstellungsverfahrens von Stahlkolbenringen sind die Abhängigkeit gegenüber dem Zulieferer - da es nur wenige Anbieter gibt - und die Unflexibilität bezüglich Werkstoffänderungen und chemischer Zusammensetzung des Materials.

Aufgabe der vorliegenden Erfindung ist es daher, einen kostengünstig herstellbaren Stahlwerkstoff zur Verfügung zu stellen, der durch die Herstellung im Schwerkraftguss, die Eigenschaften von vergütetem Gusseisen mit Kugelgraphit in mindestens einem der folgenden Punkte übertrifft:
- Mechanische Eigenschaften wie E-modul, Biegefestigkeit
- Widerstandsfähigkeit gegenüber Brüchen
- Gestaltfestigkeit
- Flankenverschleiß
- Laufflächenverschleiß.

Erfindungsgemäß wird die Aufgabe durch einen Stahlkolbenring gemäß Anspruch 1 gelöst.

Stahlkolbenringe, insbesondere aus dem Werkstoff 1.4112 (Stahl mit 18 Gew.-% Chrom) haben eine sehr gute Verschleißbeständigkeit aufgrund des hohen Chromcarbidgehalts und des hohen intermetallisch gelösten Chromgehalts. Dieses "freie" Chrom bildet durch das Nitrieren Stickstoff-Chrom-Nitride, die sehr hart sind und die Verschleißbeständigkeit des Werkstoffs wesentlich erhöhen.
Vergütete Stahlwerkstoffe wie der Werkstoff 1.4112 besitzen sehr hohe Festigkeitseigenschaften (Zug-, Biege-, Dauerfestigkeit), weil kein freier Graphit und/oder netzartig ausgebildete Carbide und/oder Phosphideutektikum enthalten sind, die als "Kerbwirkung" die mechanischen Eigenschaften negativ beeinflussen würden. Die im Werkstoff 1.4112 enthaltenen Chromcarbide liegen sehr fein und gleichmäßig verteilt vor. Diese Ausbildung von Chromcarbiden erfolgt durch das mehrmalige Umformen des Materials. Durch diesen Vorgang werden die Carbide zerkleinert, die im Gusszustand netzförmig ausgebildet vorliegen. Dieser Umformprozess ist sehr aufwendig und teuer, jedoch verleiht er dem Werkstoff die erwünschten Eigenschaften.
Die Lösung der Aufgabe besteht darin, dass durch metallurgische Maßnahmen wie die Wahl der Legierungszusammensetzung die Carbide im Werkstoff (1.4112 oder ähnliche Cr-Stähle) so ausgebildet werden, wie sie normalerweise erst nach mehrmaligem Umformen aussehen: gleich verteilt, klein und mit möglichst geringer Kerbwirkung.
Die zulegierten Elemente müssen eine größere Affinität zu Kohlenstoff besitzen als Chrom selbst. Solche Elemente sind beispielsweise Niob und Titan. Diese bilden Primärcarbide und nehmen so den vorhandenen Kohlenstoff vom Chrom "weg". Chrom bildet erst später, falls noch Kohlenstoff zur Verfügung steht, eutektische und sekundäre Carbide. Das Chrom bleibt in der metallischen Matrix frei gelöst. Hierdurch wird der Werkstoff gut nitrierbar. Die ausgebildeten Primärcarbide werden eine ähnliche Form haben, wie die zerkleinerten Cr-Carbide. Die Größe der Primärcarbide hängt von der Abkühlgeschwindigkeit ab, d. h. je kleiner der Querschnitt, desto feiner bilden sich die Carbide aus.
Ein erfindungsgemäßer Stahlwerkstoff, der insbesondere zur Herstellung von Kolbenringen geeignet ist, besteht in Gew.-% aus Kohlenstoff 0,6 bis 1,2, Chrom 12 bis 20, Niob 0,0 bis 10,0, Titan 0,0 bis 10,0, wobei der Rest Eisen einschließlich herstellungsbedingte Verunreinigungen ist, und wobei die Summe des Gehalts an Titan und Niob 2 bis 10,0 Gew.-% beträgt. Bevorzugt beträgt der Kohlenstoffanteil 0,8 bis 1,0 Gew.-%. Ebenso bevorzugt beträgt der Chromanteil 13 - 18 Gew.-%. Weiterhin wird bevorzugt, dass die Summe des Gehalts an Titan und Niob 3 bis 8 Gew.-% beträgt.

Gemäß einer bevorzugten Ausführungsform enthält der erfindungsgemäße Stahlwerkstoff weiterhin mindestens einen der Legierungsbestandteile, ausgewählt aus der Gruppe, bestehend aus

| | | | | | |
|---|---|---|---|---|---|
| P: | max. 0,045 | Mo: | max. 4,0 | Cu: | max. 1,0 |
| S: | max. 0,035 | V: | max. 2,0 | Ni: | max. 1,0 |
| Mn: | max. 4,0 | Al: | max. 1,0 | Sn: | max. 1,0 |
| Si: | max. 4,0 | Co: | max. 1,0 | Mg: | max. 1,0 |

in der entsprechend aufgeführten Menge in Gew.-%.

Gemäß einer besonders bevorzugten Ausführungsform enthält der erfindungsgemäße Stahlwerkstoff weiterhin mindestens einen der Legierungsbestandteile, ausgewählt aus der Gruppe, bestehend aus

| | | | | | |
|---|---|---|---|---|---|
| P: | max. 0,044 | Mo: | max. 1,5 | Cu: | max. 0,2 |
| S: | max. 0,030 | V: | max. 0,5 | Ni: | max. 0,2 |
| Mn: | max. 1,2 | Al: | max. 0,2 | Sn: | max. 0,2 |
| Si: | max. 1,2 | Co: | max. 0,2 | Mg: | max. 0,2 |

in der entsprechend aufgeführten Menge in Gew.-%.

Vorzugsweise ist der erfindungsgemäße Stahlwerkstoff durch Zumischung von 3 bis 8 Gew.-%, besonders bevorzugt 5 Gew.-%, Niob und/oder Titan zum Werkstoff 1.4112 herstellbar.

Vorzugsweise ist der erfindungsgemäße Stahlwerkstoff weiterhin durch Zumischung von 3 bis 8 Gew.-%, besonders bevorzugt 5 Gew.-%, Niob und/oder Titan zum Werkstoff 1.4109 herstellbar.

In den Figuren zeigt
Fig. 1 eine 500:1-Vergrößerung der mit Königswasser geätzten Oberfläche des gegossenen Werkstoffs 1.4112,
Fig. 2 eine 500:1-Vergrößerung der mit Königswasser geätzten Oberfläche des umgeformten Werkstoffs 1.4112, und
Fig. 3 eine 500:1-Vergrößerung der mit Königswasser geätzten Oberfläche des gegossenen Werkstoffs 1.4112 mit 8 Gew.-% Niob,
Fig. 4 einen Kolbenring (1).

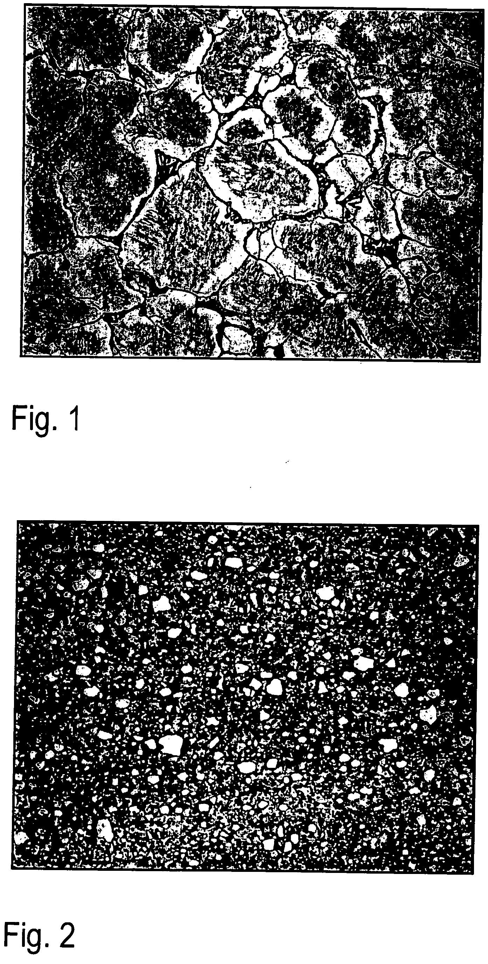

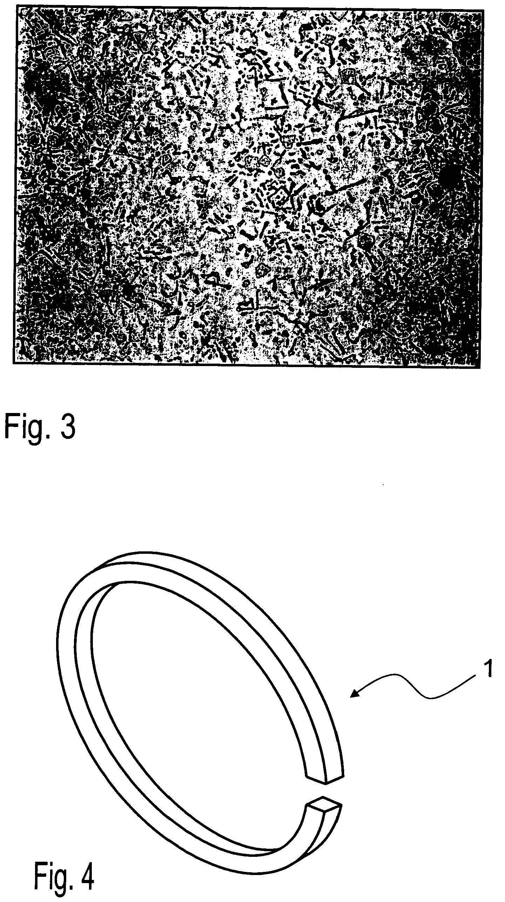

Figur 1 zeigt die geätzte Oberfläche eines gegossenen Chromstahls (Werkstoff 1.4112) in einer 500:1-Vergrößerung. Gut zu erkennen sind auf den Korngrenzen ausgeschiedene Chromcarbide. Der Stahl ist spröde, kann aber durch einen aufwendigen und kostenintensiven Umformungsprozess in einen duktilen Werkstoff überführt werden. Figur 2 zeigt die geätzte Oberfläche eines solchen gegossenen Chromstahls (Werkstoff 1.4112) nach der Umformung in einer 500:1-Vergrößerung. Die vormals netzartig ausgebildeten Chromcarbide sind durch den Umformprozess "zerkleinert". Der Werkstoff weist nach dem Umformprozess ein feinkörnigeres Gefüge auf. In Figur 3 wird ebenfalls ein feinkörniges Gefüge gezeigt. Figur 3 zeigt die geätzte Oberfläche eines gegossenen Chromstahls (Werkstoff 1.4112) mit 8 Gew.-% Niob in einer 500:1-Vergrößerung. Es sind keine Chromcarbide erkennbar. Vereinzelt kann man Niobcarbide erkennen. Dieser Werkstoff ist wie der in Figur 2 gezeigte duktil.

Das folgende Beispiel erläutert die Erfindung, ohne sie zu beschränken.

### Beispiel (erfindungsgemäß)

Untersucht wurden die mechanischen Eigenschaften des Werkstoffs 1.4112 mit der folgenden chemischen Analyse (nach DIN EN 10088-1 (08/1995), DIN EN 10088-3 (08/1995), Angaben in Gew.-%):
- C:: 0,85 - 0,95
- Si:: 0 - 1,00
- Mn:: 0 - 1,00
- P:: 0 - 0,040
- S:: 0-0,015 bzw. 0,015 - 0,030 für zu bearbeitende Erzeugnisse
0 - 0,030 für Langerzeugnisse
- Cr:: 17,00 - 19,00
- Mo:: 0,07 - 0,12
- Rest:: Eisen
sowie die mechanischen Eigenschaften des erfindungsgemäßen Werkstoffs 1.4112 mit einer Zumischung von 5 Gew.-% Niob. Tabelle 1 zeigt vergleichend die mechanischen Eigenschaften der beiden Werkstoffe.

**TABELLE 1**

| Werkstoff | 0,2 % Dehngrenze Rp 0,2 [MPa] | Streckgrenze Rm [MPa] | Bruchdehnung [%] | Einschnürung [%] | E-Modul [GPa] |
|---|---|---|---|---|---|
| 1.4112 | 0 | 1090 | 0 | 0 | 232,4 |
| 1.4112 + 5 Gew.-% Nb | 344 | 534 | 2,0 | 2,2 | 213.5 |

Die vorliegende Erfindung verbessert beispielsweise einen bekannten Stahlwerkstoff im Hinblick auf seine Zähigkeitseigenschaften und stellt somit einen Stahlwerkstoff dar, der speziell auf die Anforderungen des Kolbenrings ausgelegt ist, indem nicht die an sich bekannten mechanischen Verfahren verwenden werden, sondern durch Zugabe von Niob metallurgische Maßnahmen wie die Wahl der Legierungszusammensetzung zur Eigenschaftsverbesserung eingesetzt werden.

## Patentansprüche

1. Stahlkolbenring, der als Grundkörper einen Stahlwerkstoff umfasst, **gekennzeichnet dadurch, dass** der Stahlwerkstoff in Gew.-% besteht aus :
C: 0,6 bis 1,2
Cr: 12 bis 20
Nb: 0,0 bis 10.0
Ti: 0,0 bis 10,0
P: max. 0,045
S: max. 0,035
Mn: max. 4,0
Si: max. 4,0
Mo: max. 4,0
V: max. 2.0
Al: max. 1,0
Co: max. 1,0
Cu: max. 1,0
Ni: max. 1,0
Sn: max. 1,0
Mg: max. 1,0
Rest: Fe und herstellungsbedingte Verunreinigungen,
wobei die Summe des Gehalts an Titan und Niob 2 bis 10,0 Gew.-% beträgt.

2. Stahlkolbenring gemäß Anspruch 1, wobei der Kohlenstoffanteil 0,8 bis 1,0 Gew.-% beträgt.

3. Stahlkolbenring gemäß einem der vorstehenden Ansprüche, wobei der Chromanteil 13 - 18 Gew.-% beträgt.

4. Stahlkolbenring gemäß einem der vorstehenden Ansprüche, wobei die Summe des Gehalts an Titan und Niob 3 bis 8 Gew.-% beträgt.

5. Stahlkolbenring gemäß einem der vorstehenden Ansprüche, wobei weiterhin mindestens einer der Legierungsbestandteile, ausgewählt aus der Gruppe, bestehend aus
| | | | | | |
|---|---|---|---|---|---|
| P: | max. 0,044 | Mo: | max. 1,5 | Cu: | max. 0,2 |
| S: | max. 0,030 | V: | max. 0,5 | Ni: | max. 0,2 |
| Mn: | max. 1,2 | Al: | max. 0,2 | Sn: | max. 0,2 |
| Si: | max. 1,2 | Co: | max. 0,2 | Mg: | max. 0,2 |
in entsprechend aufgeführter Menge in Gew.-% in der Zusammensetzung enthalten ist.

6. Stahlkolbenring gemäß Anspruch 1, wobei der Stahlwerkstoff durch Zumischung von 3 bis 8 Gew.-% Niob und/oder Titan zum Werkstoff 1.4112 herstellbar ist.

7. Stahlkolbenring gemäß Anspruch 1, wobei der Stahlwerkstoff durch Zumischung von 5 Gew.-% Niob und/oder Titan zum Werkstoff 1.4112 herstellbar ist.

8. Stahlkolbenring gemäß Anspruch 1, wobei der Stahlwerkstoff durch Zumischung von 3 bis 8 Gew.-% Niob und/oder Titan zum Werkstoff 1.4109 herstellbar ist.

9. Stahlkolbenring gemäß Anspruch 1, wobei der Stahlwerkstoff durch Zumischung von 5 Gew.-% Niob und/oder Titan zum Werkstoff 1.4109 herstellbar ist.

10. Stahlkolbenring gemäß einem der vorstehenden Ansprüche, **dadurch gekennzeichnet, dass** er weiterhin an den Flanken- und/oder Laufflächen beschichtet ist.

## Claims

1. A steel piston ring comprising a steel material as its base body, **characterized in that** the steel material consists, expressed in wt.%, of the following materials:
C _{:} 0,6 to 1,2
Cr _{:} 12 to 20
Nb _{:} 0,0 to 10,0
Ti _{:} 0 , 0 to 10,0
P _{:} max. 0,045
S _{:} max. 0,035
Mn _{:} max. 4,0
Si _{:} max. 4,0
Mo _{:} max. 4,0
V _{:} max. 2,0
Al _{:} max. 1,0
Co _{:} max. 1,0
Cu _{:} max. 1,0
Ni _{:} max. 1,0
Sn _{:} max. 1,0
Mg _{:} max. 1.0
rest : Fe and manufacturing-related impurities,
wherein the sum of the titanium and niobium contents amounts to 2 to 10,0 wt.%.

2. The steel piston ring according to claim 1, wherein the carbon content amounts to 0,8 to 1,0 wt.%.

3. The steel piston ring according to one of the preceding claims, wherein the chromium content amounts to 13-18 wt .% .

4. The steel piston ring according to one of the preceding claims, wherein the sum of the titanium and niobium contents amounts to 3 to 8 wt.%.

5. The steel piston ring according to one of the preceding claims, wherein the composition furthermore contains at least one alloying constituent, which is selected from the group consisting of
| | | | | | |
|---|---|---|---|---|---|
| P | : max. 0,044 | Mo | : max. 1,5 | Cu | : max. 0,2 |
| S | : max. 0,030 | V | : max. 0,5 | Ni | : max. 0,2 |
| Mn | : max. 1,2 | Al | : max. 0,2 | Sn | : max. 0,2 |
| Si | : max. 1,2 | Co | : max. 0,2 | Mg | : max. 0,2 |
in the specified amount expressed in wt.%.

6. The steel piston ring according to claim 1, wherein the steel material can be manufactured by admixing 3 to 8 wt.% niobium and/or titanium to the material 1.4112.

7. The steel piston ring according to claim 1, wherein the steel material can be manufactured by admixing 5 wt .% niobium and/or titanium to the material 1.4112.

8. The steel piston ring according to claim 1, wherein the steel material can be manufactured by admixing 3 to 8 wt.% niobium and/or titanium to the material 1.4109.

9. The steel piston ring according to claim 1, wherein the steel material can be manufactured by admixing 5 wt.% niobium and/or titanium to the material 1.4109.

10. The steel piston ring according to one of the preceding claims, **characterized in that** it is furthermore coated on the flank surfaces and/or running surfaces.

## Revendications

1. Segment de piston en acier, lequel comprend un matériau en acier en guise de corps de base, **caractérisé en ce que** le matériau en acier se compose, en % en poids, de ce qui suit :
C : 0,6 à 1,2
Cr : 12 à 20
Nb : 0,0 à 10,0
Ti : 0,0 à 10,0
P : max. 0,045
S : max. 0,035
Mn : max. 4,0
Si : max. 4,0
Mo : max. 4,0
V : max. 2,0
Al : max. 1,0
Co : max. 1,0
Cu : max. 1,0
Ni : max. 1,0
Sn : max. 1,0
Mg : max. 1,0
le reste étant du Fe et des impuretés inhérentes à la fabrication,
dans lequel la somme de la teneur en titane et niobium est de 2 à 10,0 % en poids.

2. Segment de piston en acier selon la revendication 1, dans lequel la proportion de carbone est de 0,8 à 1,0 % en poids.

3. Segment de piston en acier selon l'une des revendications précédentes, dans lequel la proportion de chrome est de 13 - 18 % en poids.

4. Segment de piston en acier selon l'une des revendications précédentes, dans lequel la somme de la teneur en titane et niobium est de 3 à 8 % en poids.

5. Segment de piston en acier selon l'une des revendications précédentes, dans lequel, par ailleurs, au moins l'un des éléments constitutifs d'alliage sélectionné dans le groupe se composant de
| | | | | | |
|---|---|---|---|---|---|
| P : | max. 0,044 | Mo : | max. 1,5 | Cu : | max. 0,2 |
| S : | max. 0,030 | V : | max. 0,5 | Ni : | max. 0,2 |
| Mn : | max. 1,2 | Al : | max. 0,2 | Sn : | max. 0,2 |
| Si : | max. 1,2 | Co : | max. 0,2 | Mg : | max. 0,2 |
est contenu en quantité indiquée en % en poids d'une manière correspondante dans la composition.

6. Segment de piston en acier selon la revendication 1, dans lequel le matériau en acier peut être fabriqué en mélangeant le matériau 1.4112 avec 3 à 8 % en poids de niobium et/ou de titane.

7. Segment de piston en acier selon la revendication 1, dans lequel le matériau en acier peut être fabriqué en mélangeant le matériau 1.4112 avec 5 % en poids de niobium et/ou de titane.

8. Segment de piston en acier selon la revendication 1, dans lequel le matériau en acier peut être fabriqué en mélangeant le matériau 1.4109 avec 3 à 8 % en poids de niobium et/ou de titane.

9. Segment de piston en acier selon la revendication 1, dans lequel le matériau en acier peut être fabriqué en mélangeant le matériau 1.4109 avec 5 % en poids de niobium et/ou de titane.

10. Segment de piston en acier selon l'une des revendications précédentes, **caractérisé en ce qu'**il est en outre revêtu sur les flancs et/ou surfaces de roulement.
